# EUROPÄISCHE PATENTANMELDUNG

(11) **EP 4 289 593 A1**
(43) Veröffentlichungstag der Anmeldung: **13.12.2023**
(21) Anmeldenummer: 22178449.9
(22) Anmeldetag: 10.06.2022
(51) Int. Cl.: B29C 44/56, B29C 71/00, E04C 2/20, B27N 3/00, B29K 25/00

(54) **VERFAHREN ZUM HERSTELLEN VON DÄMMPLATTEN, BLOCK ZUM HERSTELLEN VON DÄMMPLATTEN, ZWISCHENLAGERANORDNUNG UND ANLAGE ZUM HERSTELLEN VON DÄMMPLATTEN**

(71) Anmelder: DAW SE, 64372 Ober-Ramstadt (DE)
(72) Erfinder: Lohmann, Thomas, 68526 Ladenburg (DE); Unik, Mikhail, 69509 Mörlenbach (DE); Stelzig, Volker, 64625 Bensheim (DE)
(74) Vertreter: Metten, Karl-Heinz

(57) **Zusammenfassung**

Ein Verfahren zum Herstellen von Dämmplatten aus einem Schaumstoff, vorzugsweise zum thermischen Dämmen von Immobilien, umfasst das Erzeugen mehrerer, vorzugsweise quaderförmiger, Blöcke mit einem Volumen von wenigstens 1m³ aus einem, insbesondere organischen oder anorganischen, Schaumstoff, vorzugweise einem Partikelschaum, wie einem Polymer-Partikelschaum, vorzugsweise umfassend oder bestehend aus expandiertem Polystyrol (EPS), in einer Schaumstoff-Formvorrichtung, insbesondere einer Partikelschaum-Form vorrichtung; das Konditionieren der mehreren Blöcke, wobei die mehreren Blöcke auf einer Zwischenlagerfläche angeordnet sind, wobei das Konditionieren Abkühlen, Trocknen und/oder Ausgasen der Blöcke umfasst; sowie das Vereinzeln einer Vielzahl von Dämmplatten aus wenigstens einem der mehreren Blöcke, wobei vorgesehen ist, dass während dem Konditionieren kontinuierlich ein Luftspalt zwischen wenigstens zwei benachbart auf der Zwischenlagerfläche angeordneten Blöcken bereitgestellt wird.

## Beschreibung

Die Erfindung betrifft ein Verfahren und eine Anlage zum Herstellen von Dämmplatten aus einem Schaumstoff, vorzugsweise zum thermischen Dämmen von Immobilien. Die Erfindung betrifft auch einen Block, insbesondere als Halbzeug, zum Herstellen von Dämmplatten. Außerdem betrifft die Erfindung eine Zwischenlageranordnung umfassend eine, insbesondere horizontale, Zwischenlagerfläche und mehrere neben einander auf der Zwischenlagerfläche angeordnete Blöcke zum Herstellen von Dämmplatten.

Die für Außenfassaden von Immobilien verwendete Wandsysteme sind regelmäßig gedämmt. Häufig wird von einem Wärmedämmverbundsystem (kurz: WDVS) gesprochen. Zur Wärmedämmung im Bauwesen ist es seit langer Zeit bekannt, Schaumstoffplatten beispielsweise aus Polystyrolpartikelschaum (EPS) einzusetzen. DE 20 2010 001 674 U1 beschreibt eine Dämmplatte für ein Wärmedämmverbundsystem mit einem Kern aus einem Hartschaumstoff. EP 3 18 1778 A1 betrifft ein Bekleidungselement für die Anbringung bzw. Herstellung von gedämmten Dächern oder Wänden.

Manche Dämmplatten neigen zu einer als "Schüsselung"bezeichneten ein- oder zwei-dimensionalen bogenartigen Abweichung von der Ebenheit. Unebene Dämmplatten lassen keine saubere Montage zu einem Wärmedämmverbundsystem zu. Das Auftreten von Unebenheiten bei Dämmplatten lässt sich in vielen Fällen auf Verformungen infolge innerer Spannungen und mangelnde Formstabilität aufgrund ungünstiger Herstellungsverfahren zurück führen.

Schaumstoffe bezeichnen im Allgemeinen Festkörper mit geschlossenzelliger Struktur. Die einzelnen Zellen können mit Umgebungsluft oder einem anderen Prozessdampf oder Prozessgas, beispielsweise Stickstoff, gefüllt sein. Zur Herstellung von Hartschaumstoffplatten für Wärmedämmverbundsysteme können zunächst Halbzeuge in Form von Schaumstoffblöcken gebildet werden. Hierzu werden Schaumstoff-Formmaschinen, wie Partikelschaum-Formmaschinen eingesetzt. Dabei kann ein Kunststoff-Ausgangsmaterial mit heißem Wasserdampf aufgeschäumt und in die geschlossenzellige Struktur gebracht werden, wobei Prozessgase, mitunter Pentan, aus dem Kunststoff freigesetzt werden. Die so geformten Blöcke werden für etwa eine Woche oder sogar über zehn Tage in einem Zwischenlager dicht nebeneinander und aufeinander abgestellt, wo sie abkühlen und Prozessgase sowie Wasserdampf abgeben. Nach diesem Konditionieren der Blöcke werden sie in einzelne Platten zerteilt und auf ein gefordertes Maß geschnitten. DE 10 2010 054 216 A1 beschreibt eine Formmaschine zum Formstabilisieren von EPS Dämmplatten, in der der gesamte Block unmittelbar nach dem Formen durch Pressen mit einem mechanischen Druck, oder mit einer Luftdruckdifferenz beaufschlagt wird. Dieser als Elastifizieren bezeichnete Vorgang hat den Nachteil, dass das Ausüben von Druck auf den Block zu Spannungen und Verformungen führ en kann die sich unkontrolliert abbauen beziehungsweise wieder zurück stellen. Mitunter stellen sich Dämmplatten sogar erst nach deren Montage an einer Baustelle zurück, was aufwändige Nachbearbeitung erforderlich machen oder eine mangelhafte Fassade zur Folge haben kann.

Es ist eine Aufgabe der Erfindung, die Nachteile des Stands der Technik zu überwinden und ein verbessertes Verfahren und eine verbesserte Anlage sowie einen Block zum Herstellen von Dämmplatten aus Schaumstoff, vorzugsweise zum thermischen Dämmen von Immobilien, bereitzustellen. Diese Aufgabe wird gelöst durch den Gegenstand der unabhängigen Ansprüche.

Demnach ist ein Verfahren zum Herstellen von Dämmplatten aus einem Schaumstoff, vorzugsweise Dämmplatten zum thermischen Dämmen von Immobilien, vorgesehen. Dämmplatten zum thermischen Dämmen von Immobilien können als Wärmedämmverbundsystem-Platten oder kurz: WDVS-Platten bezeichnet werden.

Bei dem Verfahren erfolgt gemäß einem ersten Schritt (a) ein Erzeugen mehrerer, vorzugweise quaderförmiger, Blöcke, vorzugsweise mit einem Volumen von wenigstens 1 m³, aus einem, insbesondere organischen oder anorganischen Schaumstoff, vorzugsweise einem Partikelschaum, in einer Schaumstoff-Formvorrichtung, insbesondere einer Partikelschaum-Formvorrichtung. Als Schaumstoff, insbesondere Partikelschaum, kommen beispielsweise ein Polymerschaumstoff, insbesondere Polymer-Partikelschaum, in Betracht. Der Schaumstoff, insbesondere der Polymer-Partikelschaum, umfasst vorzugsweise einen thermoplastischen Kunststoff oder ist aus diesem gebildet. Der Polymerschaumstoff, insbesondere der Polymer-Partikelschaum umfasst oder besteht, vorzugsweise besteht, aus expandiertem Polystyrol (EPS). In einer ebenfalls möglichen Ausgestaltung kann der Schaumstoff, insbesondere der Polymer-Partikelschaum, aus einem Polymermaterial umfassend oder bestehend aus wenigstens einer substituierten Cellulose gebildet sein. Mit substituierter Cellulose wird im Allgemeinen eine solche Cellulose bezeichnet, bei der die Wasserstoff-Atome der Hydroxy-Gruppen partiell oder vollständig substituiert worden sind, beispielsweise durch Alkylgruppen wir Methyl, Ethyl oder Propyl. Exemplarisch seien als besonders geeignete substituierte Cellulosen Celluloseether, zum Beispiel Carboxymethylcellulose (CMC), Methylcellulose (MC), Ethylcellulose (EC) oder Hydroxymethylethylcellulose (HEC), Celluloseester oder dergleichen genannt. Weitere geeignete Polymermaterialien für den Schaumstoff, insbesondere den Polymer-Partikelschaum, können darüber hinaus auch ausgewählt werden aus der Gruppe bestehend aus Polypropylen (PP), Polyethylen (PE), Polylactide (PLA) und deren beliebigen Mischungen. Daneben kommen auch anorganische Schaumstoffe in Betracht. Diese können beispielsweise zementös oder als Porenbeton realisiert sein. Schaumstoffe, insbesondere Partikelschäume, auf Basis von Polystyrol (PS), insbesondere expandiertes Polystyrol (EPS), sind besonders bevorzugt.

Gemäß einem zweiten Schritt (b) erfolgt, insbesondere im Anschluss an Schritt (a), vorzugsweise nach Abschluss von Schritt (a), ein Konditionieren der mehreren Blöcke, wobei die mehreren Blöcke auf einer Fläche, vorzugsweise Zwischenlagerfläche, angeordnet sind. Das Konditionieren umfasst Abkühlen, Trocknen und/oder Ausgasen der Blöcke. Das Abkühlen erfolgt insbesondere durch Verringerung der Temperatur der Blöcke. Das Trocknen kann insbesondere durch eine Verringerung des Wassergehalts in den Blöcken erfolgen. Zum Trocknen kann Wasser vorzugsweise dampfförmig aus den Blöcken entweichen. Das Ausgasen kann insbesondere durch eine Verringerung des Anteils an Prozessgas oder Prozessgasen in den Blöcken, insbesondere innerhalb der geschlossenzellige Struktur, erfolgen. Zum Ausgasen können das Prozessgas oder die Prozessgase durch Diffusion aus den Blöcken entweichen. Vorzugsweise kann das Konditionieren bei Umgebungsbedingungen erfolgen. Soweit im Sinne der vorliegenden Offenbarung von Umgebungsbedingungen die Rede ist, kann von Standardbedingungen die Rede sein, insbesondere von einer Standardtemperatur entsprechend (23 ± 2) °C und einem Standarddruck von (1013 ±10) hPa sowie einer relativen Luftfeuchte von (50 ± 5) %. Der Fachmann versteht, dass unter normalen Herstellbedingungen das Konditionieren auf einer Zwischenlagerfläche im Allgemeinen unter einer Überdachung, insbesondere in einer Zwischenlagerhalle, ohne kontrollierte Regelung der Umgebungsbedingungen erfolgen kann, wobei auf die Blöcke im Wesentlichen ein Umgebungsdruck und eine Umgebungstemperatur entsprechend des lokal vorherrschenden Wetters einwirken.

Bei dem erfindungsgemäßen Verfahren erfolgt gemäß einem dritten Schritt (c), insbesondere im Anschluss an Schritt (b), vorzugsweise nach Abschluss von Schritt (b), ein Vereinzeln einer Vielzahl von Dämmplatten aus wenigstens einem der mehreren Blöcke. Vorzugsweise werden eine Vielzahl individueller, insbesondere gleichartiger und/oder dimensionsgleicher Dämmplatten aus wenigstens einem der mehreren Blöcke vereinzelt. Vorzugsweise werden aus einem jeweiligen Block mindestens fünf, mindestens zehn, mindestens 20, mindestens 50 oder mindestens 100 Dämmplatten vereinzelt. Im Anschluss an das Vereinzeln können die mehreren Dämmplatten konfektioniert werden, beispielsweise in Gruppen zu beispielsweise 5-20 Dämmplatten zusammengefasst und verpackt werden. Die vereinzelten und gegebenenfalls konfektionierten Dämmplatten können sodann zu einer Baustelle oder einem Baustoffhändler verbracht werden.

Erfindungsgemäß ist bei dem Verfahren zum Herstellen von Dämmplatten aus einem Schaumstoff vorgesehen, dass während dem Konditionieren, vorzugsweise kontinuierlich, ein Luftspalt zwischen wenigstens zwei benachbart auf der Zwischenlagerfläche angeordneten Blöcken bereitgestellt wird. Vorzugsweise wird zwischen dem auf der Zwischenlagerfläche angeordneten Block und dem oder den dazu unmittelbar benachbarten Block oder mehreren, insbesondere 2, 3 oder 4, Blöcken je während dem Konditionieren, vorzugsweise kontinuierlich, ein Luftspalt bereitgestellt. Falls mehrere Blöcke in vertikaler Richtung übereinander gelagert, insbesondere gestapelt, werden, kann zusätzlich vorgesehen sein, dass zwischen einem auf der Zwischenlagerfläche angeordneten Block und dem wenigstens einem auf diesem obenauf liegenden Block während dem Konditionieren, vorzugsweise kontinuierlich, ein Luftspalt bereitgestellt wird. Beispielsweise kann eine Vielzahl von Blöcken mit wechselweise angeordneten Vorder- und Rückseiten in einer Reihe auf der Zwischenlagerfläche angeordnet sein, wobei die jeweils gegenüberliegenden Vorder- und Rückseiten zweier unmittelbar benachbarter Blöcke in der Blockreihe während dem Konditionieren, vorzugsweise kontinuierlich, durch einen Luftspalt voneinander getrennt sind. Die Vorderseite kann auch als vordere Seitenfläche und die Rückseite als rückwärtige Seitenfläche bezeichnet werden. Im Allgemeinen werden die Oberflächen des erzeugten Blocks als Seitenflächen bezeichnet. Falls auf einer Zwischenlagerfläche mehrere Blöcke nebeneinander angeordnet sind, kann vorzugsweis vorgesehen sein, dass zwischen der rechten Seitenfläche eines Blockes und der linken Seitenfläche des dazu unmittelbar benachbarten Blockes für die Dauer des Konditionierens, vorzugsweise kontinuierlich, ein Luftspalt bereitgestellt wird. Bevorzugt werden zum Konditionieren mehrere Blockreihen auf der Zwischenlagerfläche angeordnet, wobei entlang einer Reihe zwischen den jeweiligen Vorder- und Rückseiten stets kontinuierlich ein Luftspalt aufrechterhalten wird und wobei ebenfalls zwischen den linken und rechten Seitenflächen der benachbarten Blockreihen stets kontinuierlich ein Luftspalt vorgesehen wird. Die Anzahl entlang einer Blockreihe hintereinander aufgestellter Blöcke auf der Zwischenlagerfläche kann während dem Konditionieren mindestens zwei, mindestens drei, mindestens fünf, mindestens zehn oder mindestens 20 betragen. Die Anzahl auf einer Zwischenfläche nebeneinander, insbesondere in mehreren Spalten, aufgestellter Blöcke oder Blockreihen kann während dem Konditionieren mindestens zwei, mindestens drei, mindestens fünf, mindestens zehn oder mindestens 20 betragen.

Mit dem erfindungsgemäßen Verfahren zum Herstellen von Dämmplatten aus einem Schaumstoff lassen sich besonders gut formstabile Dämmplatten herstellen. Formstabile Dämmplatten unterliegen vorzugsweise keiner sogenannten Schüsselung, d. h. vorzugsweise keiner ein- oder zwei-dimensionalen bogenartigen Abweichung von der Ebenheit gemäß DIN EN 825:2013 in Richtung der Plattenlänge und/oder Plattenbreite bzw. einer Abweichung von nicht mehr als 5 mm, vorzugsweise nicht mehr als 3 mm.

Gemäß einer bevorzugten Ausführung der Erfindung wird während dem Konditionieren zwischen den wenigstens zwei benachbarten Blöcken wenigstens ein Abstandshalter zum Erhalten des Luftspalts angeordnet. Wenigstens ein Abstandshalter kann zwischen der Vorderseite eines Blocks und der Rückseite eines dazu benachbarten Blocks angeordnet werden. Alternativ oder zusätzlich kann wenigstens ein Abstandshalter zwischen der rechten Seitenfläche eines Blocks und der linken Seitenfläche eines unmittelbar daneben angeordneten Blocks angeordnet werden. Ferner kann optional zwischen der Oberseite eines unmittelbar auf der Zwischenlagerfläche stehenden Blocks und der Unterseite eines darauf liegenden Blocks wenigstens ein Abstandshalter angeordnet werden. Wenn während dem Konditionieren mehrere Block-Reihen auf der Zwischenlagerfläche gelagert werden, kann bevorzugt sein, dass je wenigstens ein Abstandshalter zum Erhalten der Luftspalte zwischen den hintereinander in der wenigstens einen Reihe angeordneten Blöcken angeordnet wird. Wenn während dem Konditionieren mehrere Block-Zeilen auf der Zwischenlagerfläche gelagert werden, kann bevorzugt sein, dass je wenigstens ein Abstandshalter zum Erhalten der Luftspalte zwischen den nebeneinander in der wenigstens einen Zeile angeordneten Blöcken angeordnet wird. Mit konventionellen Flurförderfahrzeugen alleine kann eine verlässlich durch Luftspalte vereinzelte Lagerung von Blöcken nicht erreicht werden. Es hat sich zudem herausgestellt, dass während dem Konditionieren mehrerer Blöcke auf einer Zwischenlagerfläche ein Risiko besteht, dass die mehreren Blöcke mit ihren Oberflächen beispielsweise durch Wind oder Einwirkung von Flurförderfahrzeugen gegeneinander gedrängt werden, was eine Unterbrechung des erfindungsgemäß vorgesehenen Luftspalts während dem Konditionieren zur Folge haben kann. Indem während dem Konditionieren einer oder mehrere Abstandshalter zwischen jeweils zwei benachbarten Blöcken angeordnet werden, kann die insbesondere kontinuierliche Aufrechterhaltung des Luftspalts zwischen den benachbarten Blöcken während dem Konditionieren verbessert werden. Das Anordnen kann durch beispielsweise Aufsetzen des Abstandshalters auf der Zwischenlagerfläche unmittelbar benachbart zu einem Block erfolgen.

Bei einer Weiterbildung der Erfindung kann der wenigstens eine Abstandshalter vor dem Konditionieren an wenigstens einen ersten oder wenigstens zwei Blöcke angeformt werden, die zum Konditionieren benachbart zueinander auf der Zwischenlagerfläche angeordnet werden. Vorzugsweise wird wenigstens ein Abstandshalter an mehrere, insbesondere wenigstens die Hälfte, vorzugweise alle, der Blöcke angeformt, bevor sie zum Konditionieren auf der Zwischenlagerfläche angeordnet werden. Optional wird das Anformen des wenigstens einen Abstandshalters an einen Block im Anschluss an das Erzeugen dieses Blockes durchgeführt. Es ist denkbar, dass die Anformung wenigstens eines Abstandshalters an einen jeweils in Block nach dem Anordnen oder während dem Anordnen des jeweiligen Blocks auf der Zwischenlagerfläche erfolgt. Beispielsweise ist es denkbar, dass ein erster Block auf der Zwischenlagerfläche angeordnet wird und dann mit wenigstens einem Abstandshalter ausgestattet wird, bevor einer oder mehrere Blöcke benachbart zu dem ersten Block auf der Zwischenfläche angeordnet werden. Das Anformen des wenigstens einen Abstandshalters kann beispielsweise durch Stecken, Heften, Nageln, Dübeln, Kleben, Schweißen, oder ähnliches oder eine Kombination davon, erfolgen.

Bei einer bevorzugten Weiterbildung eines erfindungsgemäßen Verfahrens wird der wenigstens eine Abstandshalter an den wenigstens einen ersten Block beim Erzeugen dieses Blockes angeformt. Es kann zweckmäßig sein, dass der wenigstens eine Abstandshalter in einem Werkzeug einer Schaumstoff-Formvorrichtung, insbesondere einer Partikelschaum-Formvorrichtung, zum Erzeugen eines Blocks gehalten ist, und beim Bilden des Blocks in der Partikelschaum-Formvorrichtung mit dem Block verbunden wird. Besonders bevorzugt wird der wenigstens eine Abstandshalter beim Erzeugen dieses Blockes integral mit dem Block, vorzugsweise aus dem Schaumstoff, gebildet. Der wenigstens eine Abstandshalter kann beispielsweise integral mit dem Block gebildet und so an dessen Oberfläche angeformt werden. Beispielsweise kann ein Block mit wenigstens einem Abstandshalter an wenigstens einer Oberfläche des Blocks in einer Schaumstoff-Formvorrichtung, insbesondere einer Partikelschaum-Formvorrichtung gebildet werden. Indem der Block und dessen wenigstens ein Abstandshalter integral miteinander aus dem Schaumstoff gebildet werden, kann eine besonders ökonomische und ökologische Fertigung erfolgen.

Gemäß einer zweckmäßigen Weiterbildung eines erfindungsgemäßen Verfahrens mit wenigstens einem integral mit dem Block gebildeten Abstandshalter wird dieser an einer Übergangskante zum jeweils zugeordneten, insbesondere quaderförmigen, Block mit einer Übergangskurve, insbesondere einem Übergangsradius, gebildet. Vorzugsweise wird beziehungsweise werden die gesamte(n) umlaufende(n) Übergangskante(n) des Abstandshalters mit einer Übergangskurve, insbesondere einem Übergangsradius, gebildet. Die Übergangskurve kann beispielsweise gemäß einem n-stufigen Zugdreieck nach Prof. Dr. habil. Claus Mattheck (siehe "Denkwerkzeuge nach der Natur", Mattheck, 2010) gebildet sein, wobei insbesondere n im Bereich 1 bis 5, vorzugsweise n=2 oder n=3 gewählt ist. Der Übergangsradius beschreibt vorzugsweise einen Radius im Bereich 0,5 cm bis 5 cm, vorzugsweise 1 cm bis 3 cm. Auf diese Weise kann eine scharfe Übergangskante, welche sowohl unter mechanischen wie auch unter thermischen Gesichtspunkten ungünstig ist, zwischen dem Abstandshalter und der Seitenfläche des Blocks, an welcher der Abstandshalter angeformt ist, vermieden werden.

Bei einer optionalen Weiterbildung des erfindungsgemäßen Verfahrens wird der wenigstens eine Abstandshalter mit einer länglichen und/oder rechteckigen Basisfläche gebildet. Diese Basisfläche wird in einem Kontaktbereich des Abstandshalters zu einer Außenfläche des zugeordneten, vorzugsweise quaderförmigen Blocks angeordnet. Vorzugsweise wird wenigstens ein Abstandshalter mit länglicher und/oder rechteckiger Basisfläche wie oben beschrieben an einen Block angeformt, insbesondere integral mit dem Block gebildet.

Bei einer alternativen Weiterbildung des erfindungsgemäßen Verfahrens wird der wenigstens eine Abstandshalter mit einer runden Basisfläche gebildet. Diese Basisfläche wird in einem Kontaktbereich des Abstandshalters zu einer Außenfläche des zugeordneten, vorzugsweise quaderförmigen Blocks angeordnet. Vorzugsweise wird wenigstens ein Abstandshalter mit runder Basisfläche wie oben beschrieben an einen Block angeformt, insbesondere integral mit dem Block gebildet.

Bei einer zweckmäßigen Weiterbildung des erfindungsgemäßen Verfahrens wird der wenigstens eine Abstandshalter halbkugelförmig, zylinderförmig, kegelförmig oder kegelstumpfförmig bereitgestellt, insbesondere gebildet. Bevorzugt wird der Abstandshalter zylinderförmig, kegelförmig oder kegelstumpfförmig gebildet. Alternativ oder zusätzlich ist vorgesehen, dass ein Abstandshalter gebildet wird, der sich ausgehend von seiner Basisfläche verjüngt. Derartig geformte, sich verjüngende Abstandshalter haben sich, insbesondere beim Entformen des Blocks aus einem Schaumstoff-Formwerkzeug, als besonders resistent gegen Beschädigungen erwiesen.

Bei einer Ausführung eines erfindungsgemäßen Verfahrens, bei dem ein Abstandshalter an den Block angeformt wurde, kann vorgesehen sein, dass der wenigstens eine Abstandshalter vor dem oder während dem Vereinzeln der Dämmplatten von dem zugeordneten Block abgetrennt wird. Vorzugsweise kann vorgesehen sein, dass das Material des Abstandshalters, insbesondere bei der Erzeugung eines anderen Blocks, zumindest teilweise wiederverwertet wird. Beim Vereinzeln der Dämmplatten aus einem Block kann die Oberfläche des Blocks (die als Schwarte bezeichnet werden kann) entfernt und das Schaumstoff-Material der Schwarte einer Wiederverwertung zugeführt werden. Einzeln oder gemeinsam mit der Schwarte kann auch der wenigstens eine Abstandshalter beim Vereinzeln der Dämmplatten von einem Block entfernt und einer Material-Wiederverwertung zugeführt werden.

Bei einer Ausführung des Verfahrens wird das Konditionieren, insbesondere das Abkühlen, Trocknen und/oder Ausgasen, für weniger als 120 Stunden, insbesondere nicht mehr als 72 Stunden, vorzugsweise nicht mehr als 48 Stunden, besonders bevorzugt nicht mehr als 24 Stunden durchgeführt. Vorzugsweise wird bei dem erfindungsgemäßen Verfahren das Vereinzeln einer Vielzahl von Dämmplatten aus wenigstens einem der mehreren Blöcke weniger als 120 Stunden, insbesondere nicht mehr als 72 Stunden, vorzugsweise nicht mehr als 48 Stunden, besonders bevorzugt nicht mehr als 24 Stunden, nach dem Erzeugen dieser mehreren Blöcke durchgeführt. Überraschenderweise haben die Erfinder herausgefunden, dass sich aus den mehreren Blöcken eine Vielzahl von Dämmplatten mit besonders guten mechanischen- und Dämmeigenschaften durch deren Vereinzelung aus den mehreren Blöcken bereits nach relativ kurzer Konditionier-Zeit herstellen lassen. Die Produktionszeit von Dämmplatten kann im Vergleich zu herkömmlichen Verfahren auf die Hälfte oder sogar weniger verkürzt werden.

Gemäß einer zweckmäßigen Ausführung des Verfahrens werden die mehreren Blöcke während dem Konditionieren, insbesondere kontinuierlich, mit einer Luftströmung beaufschlagt. Beispielsweise können die Blöcke auf einer insbesondere überdachten Zwischenlagerfläche angeordnet sein, wobei oberhalb und/oder unterhalb der Zwischenlagerfläche ein Lüfter, wie etwa Ventilatoren, Gebläse oder ähnliches, angeordnet und betrieben werden. Es können beispielsweise mehrere Deckenventilatoren verwendet werden. Die Lüfter erzeugen die Luftströmung, welche die mehrere Blöcke umströmt. Zusätzlich oder alternativ können Ventilatoren, Gebläse oder ähnliches seitlich an der Zwischenlagerfläche und/oder im Bereich der Zwischenlagerfläche angeordnet und betrieben werden, um die auf die mehreren Blöcke einwirkende Luftströmung bereitzustellen. Alternativ oder zusätzlich ist bei einer Ausführung des Verfahrens ist die Nutzung baulicher Maßnahmen zur Erzeugung einer Zwangslüftung vorgesehen, z. B. durch Kaminwirkung, allein oder in Verbindung mit wenigstens einem Lüfter.

Die Erfindung betrifft auch einen Block zum Herstellen von Dämmplatten, vorzugsweise zum thermischen Dämmen von Immobilien, wobei der, insbesondere quaderförmige, Block ein Volumen von wenigstens 1 m³ aufweist und Schaumstoff, insbesondere Partikelschaum, wie ein Polymer-Partikelschaum, umfasst oder daraus besteht.

Der erfindungsgemäße Block weist wenigstens eine, insbesondere ebene, Seitenfläche auf. Es sei klar, dass im Sinne der vorliegenden Offenbarung der Begriff "Seitenfläche" im Allgemeinen für eine äußere Oberfläche eines Blocks steht. Mit Seitenfläche kann also beispielsweise eine Vorderseite, Rückseite, Oberseite, Unterseite, rechte Seitenfläche oder linke Seitenfläche eines insbesondere quaderförmigen Blocks bezeichnet sein. Vorzugsweise weist ein Block eine Grundfläche auf, die insbesondere mehreckig, vorzugsweise rechteckig oder quadratisch ist. Vorzugsweise hat der Block eine im Wesentlichen prismenförmige Gestalt. An die Grundfläche angrenzende Seitenflächen sind vorzugsweise in einem Winkel orthogonal zur Grundfläche ausgerichtet. Eine insbesondere rechteckige Grundfläche eines vorzugweise quaderförmigen Blocks kann eine Breite im Bereich 0,5 m bis 2,5 m, insbesondere 1,0 m bis 1,5 m, beispielsweise 1,2 m, und/oder eine Länge im Bereich 0,5 m bis 2,5 m, insbesondere 0,8 m bis 1,2 m, beispielsweise 1,0 m, aufweisen. Die Höhe eines vorzugsweise quaderförmigen Blocks kann im Bereich 1,5 m bis 10 m, insbesondere im Bereich 4 m bis 8 m, vorzugsweise im Bereich 5 m bis 7 m liegen. An den Seitenflächen des Blocks kann eine Verschnittzugabe von je Seite etwa 5 mm bis 50 mm, insbesondere 10 mm bis 30 mm, vorzugsweise etwa 20 mm bereitgestellt sein.

An wenigstens einer Seitenfläche des Blocks ist wenigstens ein von dieser Seitenfläche hervorstehender Abstandshalter angeformt. Vorzugsweise erstreckt sich der wenigstens eine Abstandshalter quer, insbesondere senkrecht, ausgehend von der ihm zugeordneten Seitenfläche des Blocks. Ausgehend von der vorzugweise ebenen Seitenfläche erstreckt sich der Abstandshalter über eine Abstandstiefe, um einen Luftspalt zwischen dem Block und einem eventuellen den weiteren, benachbarten anderen Block zu definieren. Es sei klar, dass die Querschnittsfläche des Abstandshalters wesentlich kleiner ist als die ihm zugeordnete Seitenfläche. Vorzugsweise ist die Größe einer Seitenfläche wenigstens zehnmal, insbesondere wenigstens 100 mal, so groß wie die Querschnittsfläche bzw. Basisfläche eines an dieser Seitenfläche angeformten Abstandshalters.

Gemäß einer bevorzugten Ausführung eines erfindungsgemäßen Blocks ist der wenigstens eine Abstandshalter integral mit dem Block gebildet. Vorzugsweise ist der Abstandshalter integral mit dem Block aus dem Schaumstoff, insbesondere dem Partikelschaum, gebildet. Indem der Block einstückig mit wenigstens einem daran angeformten Abstandshalter gebildet ist, kann der Block gemeinsam mit dem Abstandshalter besonders einfach, beispielsweise durch Flurförderfahrzeuge, gehandhabt werden. Durch die unmittelbare Anformung des Abstandshalters am Block aus demselben Material kann außerdem gewährleistet werden, dass sich der Abstandshalter nicht unbeabsichtigt von dem Block löst.

Bei einer Weiterbildung eines erfindungsmäßen Blocks weist der wenigstens eine daran angeformten Abstandshalter an seiner Übergangskante zur ihm zugeordneten Seitenfläche eine Übergangskurve, insbesondere einen Übergangsradius, auf. Die Übergangskante begrenzt den durch die die vorzugsweise Ebene Seitenfläche festgelegte Bereich, an welchem ausgehend von der Basisfläche sich der Abstandshalter von der jeweiligen Seitenfläche ab steht. Der Übergangsradius hat vorzugsweise einen Radius, der nicht größer ist als die Hälfte der durch den Abstandshalter definierten Abstandstiefe.

Bei einer Ausführung eines Blocks weist der wenigstens eine Abstandshalter an der Seitenfläche eine längliche und/oder rechteckige Basisfläche auf. Insbesondere ist der wenigstens eine Abstandshalter kuppelförmig, kubusförmig, pyramidenförmig oder pyramidenstumpfstumpfförmig geformt.

Gemäß einer bevorzugten Ausführung eines erfindungsmäßen Blocks weist der wenigstens eine Abstandshalter an der ihm zugeordneten Seitenfläche eine runde Basisfläche auf. Die runde Basisfläche des wenigstens einen Abstandshalters kann beispielsweise oval oder, vorzugsweise, kreisförmig sein.

Vorzugsweise ist der wenigstens eine Abstandshalter halbkugelförmig, zylinderförmig, kegelförmig oder kegelstumpfförmig geformt. Der wenigstens eine Abstandshalter steht konvex von der zugeordneten Seitenfläche hervor.

Es kann bevorzugt sein, dass der wenigstens eine Abstandshalter eine von der ihm zugeordneten Seitenfläche fortweisende Stirnfläche aufweist, die von wenigstens einer mit einem Radius ausgeführten Randkante begrenzt ist. Der Radius der Randkante ist vorzugweise kleiner als die Hälfte, insbesondere kleiner als ein Viertel, der durch den Abstandshalter definierten Abstandtiefe. Die Stirnfläche ist vorzugweise flach und insbesondere im Wesentlichen planparallel zu der Seitenfläche, an welcher der Abstandshalter mit der Stirnfläche angeformt ist. Die Querschnittsgröße der Stirnfläche ist insbesondere nicht kleiner als drei Viertel oder nicht kleiner als die Hälfte der Basisfläche des jeweiligen Abstandshalters. Der Abstand der Stirnfläche zur Seitenfläche bestimmt die Abstandtiefe des Abstandshalters. Durch das Bereitstellen einer Stirnfläche wird das Risiko einer Beschädigung eines mit dem Abstandshalter in Kontakt stehenden anderen Blocks verringert.

Insbesondere verjüngt sich der wenigstens eine Abstandshalter ausgehend von der Seitenfläche. Vorzugsweise definiert der Abstandshalter unmittelbar an der Seitenfläche eine Basisfläche, wobei sich der Querschnitt des Abstandshalters mit zunehmendem Abstand von der Seitenfläche ausgehend von der Fläche der Basisfläche verkleinert. Solcherart geformte Abstandshalter haben sich als besonders robust gegen Beschädigungen herausgestellt. Sie können außerdem besonders einfach aus Formen zum Integralen Bilden des Blocks mit einem daran angeformten Abstandshalter entfernt werden.

Gemäß einer bevorzugten Ausführung eines erfindungsmäßen Blocks hat der wenigstens eine Abstandshalter eine Breite, insbesondere ein Basisflächendurchmesser oder allgemeiner: Basisflächendiagonale, parallel zur Seitenfläche, die nicht mehr als 20 cm oder nicht mehr als 10 cm, vorzugsweise nicht mehr als 6 cm beträgt. Dadurch kann die für den Abstandshalter verwendete Materialmenge bei ausreichender Abstandshaltewirkung minimiert werden.

Bei einer besonders bevorzugten Ausführung umfasst der Block wenigstens zwei und/oder nicht mehr als zehn, insbesondere nicht mehr als sechs, vorzugsweise nicht mehr als vier Abstandshalter, die an dieser wenigstens einen Seitenfläche angeordnet sind. Der Block kann mehrere Seitenflächen mit jeweils wenigstens zwei und oder nicht mehr als zehn, insbesondere nicht mehr als sechs, vorzugsweise nicht mehr als vier an der jeweiligen Seitenfläche angeordneten Abstandshaltern haben. Beispielsweise kann der Block 2 oder 3 Seitenflächen mit je wenigstens einem oder je mehreren daran angeformten Abstandshaltern haben. Vorzugsweise weisen die an derselben Seitenfläche angeordneten mehreren Abstandshalter die gleiche Abstandstiefe auf. Alternativ oder zusätzlich können die mehreren an derselben Seitenfläche angeordneten Abstandshalter dazu ausgelegt und eingerichtet sein, eine kontinuierliche Luftspaltbreite zu einer korrespondierenden, insbesondere ebenen, Gegenseitenfläche eines anderen bzw. benachbarten Blocks zu definieren. Eine Gegenseitenfläche kann insbesondere eine Seitenfläche eines Blocks bezeichnen, die frei von Abstandshaltern ist.

Bei einer Weiterbildung eines Blocks mit wenigstens einer Seitenfläche mit mehreren Abstandshaltern ist diese Seitenfläche in zwei gleich große, insbesondere spiegelsymmetrische, Sektoren unterteilbar. Beispielsweise können die Sektoren der Seitenfläche in Bezug auf eine auf der Zwischenlagerfläche aufsetzbaren Unterseite, die insbesondere die Grundfläche bildet, als oberen Sektor und als unterer Sektor definiert sein. Die wenigstens zwei Abstandshalter dieser Seitenfläche, insbesondere des ganzen Blocks, können ausschließlich in einem ersten, beispielsweise oberen, der zwei Sektoren angeordnet sein. Alternativ können die wenigstens zwei Abstandshalter dieser Seitenfläche, insbesondere des ganzen Blocks, ausschließlich in einem zweiten, beispielsweise unteren, der zwei Sektoren angeordnet sein. Alternativkann vorgesehen sein, dass die wenigstens zwei Abstandshalter, vorzugweise gleichmäßig und/oder symmetrisch, in den zwei Sektoren dieser Seitenfläche, insbesondere des ganzen Blocks, verteilt angeordnet sind.

Gemäß einer damit kombinierbaren Weiterbildung umfasst der Block eine primäre Seitenfläche und wenigstens einen an dieser primären Seitenfläche angeformten primären Abstandshalter und zusätzlich weist dieser Block wenigstens eine weitere, sekundäre Seitenfläche mit wenigstens einem an der sekundären Seitenfläche angeformten sekundären Abstandshalter auf. Die sekundäre Seitenfläche grenzt an die primäre Seitenfläche an. Beispielsweise kann bei einem quaderförmigen Block die primäre Seitenfläche in Querrichtung des Blocks orientiert sein und die sekundäre Seitenfläche in Längsrichtung des Blocks. Beispielsweise kann die primäre Seitenfläche die Vorderseite und die sekundäre Seitenfläche die rechte oder linke Seitenfläche des Blocks realisieren. Optional kann zusätzlich vorgesehen sein, dass der Block eine an die primäre Seitenfläche und an die sekundäre Seitenfläche angrenzende tertiäre Seitenfläche mit wenigstens einem an der tertiären Seitenfläche angeordneten tertiären Abstandshalter aufweist. Beispielsweise kann zusätzlich zur Vorderseite und zur rechten oder linken Seitenfläche des Blocks die Oberseite oder die Unterseite des Blocks als tertiäre Seitenfläche mit wenigstens einem tertiären Abstandshalter ausgestattet sein. Indem ein Block an mehreren Seiten mit Abstandshaltern ausgestattet ist, kann auf besonders einfache Weise realisiert werden, dass bei in Reihen und/oder Zeilen sowie gegebenenfalls übereinander auf einer Zwischenlagerfläche gelagerte Blöcken Abstandshalter zwischen sämtlichen jeweils paarweise zueinander unmittelbar benachbarten Blöcken angeordnet sind, um Luftspalte kontinuierlich aufrecht zu erhalten.

Bei einer optionalen Ausführung eines Blocks mit sind an zwei gegenüberliegenden Seitenflächen des Bocks Abstandshalter angeformt, beispielsweise an der Vorderseite und der an der Rückseite des Blocks. Die übrigen Seitenflächen können frei von angeformten Abstandshaltern sein. Derartige Blöcke können beispielsweise in einer Schaumstoff-Formvorrichtung, insbesondere einer Partikelschaum-Formvorrichtung, die eine Kavität zum Formen des Blocks mit dem wenigstens einen Abstandshalter aufweist. Die Kavität umfasst wenigstens einen Topfabschnitt zum Formen des Abstandshalters in einer ortsfesten Wand der Formvorrichtung. Ein weiterer Topfabschnitt zum Formen des gegenüberliegenden Abstandshalters kann in einem beweglichen Wandabschnitt, wie einer beweglichen Seitenwand und/oder einem Türblattabschnitt der Formvorrichtung, angeordnet sein.

Bei einer bevorzugten Ausführung eines erfindungsgemäßen Blocks mit einer ersten Seitenfläche und wenigstens einem an dieser ersten Seitenfläche angeformten Abstandshalter weist dieser Block eine gegenüber zur ersten Seitenfläche angeordnete, vorzugsweise plane, Gegenseitenfläche frei von Abstandshaltern auf. Insbesondere kann vorgesehen sein, dass die Vorderseite des Blocks die erste Seitenfläche mit wenigstens einem Abstandshalter bildet und die dazu gegenüberliegende Rückseite als Seitenfläche frei von Abstandshaltern realisiert ist. Es kann bevorzugt sein, dass ein erfindungsgemäßer Block mehrere Gegenseitenflächen frei von Abstandshaltern hat. Insbesondere ist die Oberseite und/oder die Unterseite, insbesondere korrespondierend zur Grundfläche, des Abstandshalters eine Gegenseitenfläche frei von Abstandshaltern realisiert. Zusätzlich oder alternativ können bei einem erfindungsgemäßen Block die rechte Seitenfläche und/oder die linke Seitenfläche frei von Abstandshaltern als Gegenseitenfläche gebildet sein. Es ist denkbar, dass nur eine rechte oder linke Seitenfläche als Gegenseitenfläche gebildet ist. Beispielsweise kann ein quaderförmiger Block mit Abstandshaltern an einer primären, einer sekundären und einer tertiären Seitenfläche und zu diesen Seitenflächen gegenüberliegenden drei Gegenseitenflächen frei von Abstandshaltern gebildet sein. Vorzugsweise beträgt die Anzahl der Gegenseitenflächen frei von Abstandshaltern bei einem erfindungsgemäßen Blocks wenigstens eins, wenigstens drei, wenigstens vier oder fünf. es hat sich gezeigt, dass bei einer geschickten Auslegung der Anordnung von Blöcken auf einer Zwischenlagerfläche bereits Abstandshalter an nur einer oder nur zwei Seitenflächen der Blöcke ausreichend sein können, um sicherzustellen, das zwischen allen paarweise unmittelbar zu einander benachbarten Blöcken Luftspalte kontinuierlich bereitgestellt werden.

Bei einer weiteren bevorzugten Ausführung eines Blocks, die mit den vorigen kombinierbar ist, hat der Block ein Volumen von wenigstens 2 m³, insbesondere wenigstens 4 m³. Alternativ oder zusätzlich kann vorgesehen sein, dass der erfindungsgemäße Block ein Volumen von nicht mehr als 20 m³, insbesondere nicht mehr als 10 m³, vorzugsweise nicht mehr als 8 m³ aufweist. Besonders bevorzugt weist der Block ein Volumen im Bereich 5 m³ bis 7 m³ auf. Es hat sich herausgestellt, dass mit derart großen Blöcken auf besonders effiziente Weise viele formstabile und maßhaltige Dämmplatten hergestellt werden können.

Die Erfindung betrifft vorzugsweise wenigstens einen erfindungsgemäßen Block wie oben beschrieben, der während dem zuvor beschriebenen erfindungsgemäßen Verfahren hergestellt wurde. Bei dem erfindungsgemäßen Verfahren wird vorzugsweise wenigstens ein erfindungsgemäßer Block wie oben beschrieben erzeugt.

Die Erfindung betrifft außerdem eine Zwischenlageranordnung. Die Zwischenlageranordnung umfasst eine, insbesondere horizontale, Zwischenlagerfläche. Die Zwischenlageranordnung umfasst ferner mehrere neben einander auf der Zwischenlagerfläche angeordnete Blöcke zum Herstellen von Dämmplatten, vorzugsweise zum thermischen Dämmen von Immobilien. Die einzelnen, insbesondere quaderförmigen, Blöcke weisen je ein Volumen von wenigstens 1 m³ auf. Die Blöcke umfassen einen Schaumstoff, insbesondere Partikelschaum, wie ein Polymer-Partikelschaum, oder bestehen daraus. Vorzugsweise können die Blöcke wie oben beschrieben mit wenigstens einem Abstandshalter gebildet sein. Bei der erfindungsgemäßen Zwischenlageranordnungist vorgesehen, das zwischen wenigstens zweipaarweise benachbarten Blöcken ein Luftspalt bereitgestellt ist, der wenigstens 3 cm, vorzugsweise wenigstens 5 cm, und/oder nicht mehr als 10 cm, vorzugsweise nicht mehr als 6 cm, beträgt. Zwei paarweise unmittelbar benachbarte Blöcke können beispielsweise in einer Reihe derart auf der Zwischenlagerfläche angeordnet sein, dass die Vorderseite oder vordere Seitenfläche eines ersten Blocks unmittelbar der Rückseite oder rückwärtigen Seitenfläche des zweiten Blocks des Blockpaars gegenüberliegt, wobei zwischen der Vorderseite des ersten Blocks und der Rückseite des zweiten Blocks der Luftspalt bereitgestellt ist. Alternativ können zwei paarweise unmittelbar benachbarte Blöcke in einer Zeile derart auf der Zwischenlagerfläche angeordnet sein, dass die rechte Seitenfläche des ersten Blocks unmittelbar der linke Seitenfläche des zweiten Blocks des Blockzeile gegenüberliegt, wobei zwischen der rechten Seitenfläche des ersten Blocks und der linken Seitenfläche des zweiten Blocks der Luftspalt bereitgestellt ist. Eine Blockzeile umfasst mehrere, insbesondere wenigstens drei, wenigstens fünf oder wenigstens zehn nebeneinander mit paarweise gegenüberliegenden rechten und linken Seitenflächen angeordnete Blöcke. Eine Blockreihe umfasst mehrere, insbesondere wenigstens drei, wenigstens fünf oder wenigstens zehn hintereinander mit paarweise gegenüberliegenden Vorder- und Rückseiten angeordnete Blöcke. Mehrere Blöcke der Zwischenlageranordnungkönnen auf der Zwischenlagerfläche in wenigstens zwei, insbesondere mehr, Reihen hintereinander und/oder in wenigstens zwei, insbesondere mehr, Zeilen nebeneinander angeordnet sein. Zwischen mehreren hintereinander angeordneten Zeilen nebeneinander angeordneter Blöcke kann jeweils ein Luftspalt von wenigstens 3 cm und/oder nicht mehr als 10 cm Luftspaltbreite vorgesehen sein. Zwischen mehreren nebeneinander angeordneten Reihen hintereinander angeordneter Blöcke kann jeweils ein Luftspalt von wenigstens 3 cm und/oder nicht mehr als 10 cm Luftspaltbreite vorgesehen sein.

Gemäß einer Ausführung der Zwischenlageranordnung ist zwischen den wenigstens zwei paarweise benachbarten Blöcken je wenigstens ein Abstandshalter zum Erhalten des Luftspalts angeordnet. Vorzugsweise ist je wenigstens ein Abstandshalter zwischen je zwei unmittelbar hinter einander in einer Reihe angeordneten Blöcken angeordnet. Alternativ oder zusätzlich ist je wenigstens ein Abstandshalter zwischen je zwei unmittelbar nebeneinander in einer Zeile angeordneten Blöcken angeordnet. Zwischen mehreren paarweise nebeneinander in Reihen angeordneten Blöcken kann jeweils wenigstens ein Abstandshalter zum Erhalten des Luftspalts angeordnet sein. Zusätzlich oder alternativ kann zwischen mehreren paarweise hintereinander in Zeilen angeordneten Blöcken jeweils wenigstens ein Abstandshalter zum Erhalten des Luftspalts angeordnet sein.

Insbesondere steht gemäß einer Ausführung der Zwischenlageranordnung der wenigstens eine Abstandshalter in einem Berührkontakt mit wenigstens einem der wenigstens zwei paarweise benachbarten Blöcke. Bei einer Zwischenlageranordnung mit einer Vielzahl auf der Zwischenlagerfläche angeordneten Blöcken kann eine entsprechende Vielzahl Abstandshalter in einem Berührkontakt mit wenigstens je einem von je zwei paarweise benachbarten Blöcken vorgesehen sein.

Bei einer Ausführung einer Zwischenlageranordnung ist wenigstens ein Lüfter, wie ein Ventilator, ein Gebläse oder dergleichen, zum beaufschlagen der Blöcke mit einer Luftströmung vorgesehen. Der wenigstens eine Lüfter kann oberhalb der Zwischenlagerfläche, unterhalb der Zwischenlagerfläche, benachbart zu Zwischenlagerfläche und/auf der Zwischenlagerfläche angeordnet sein. Die Zwischenlageranordnung kann mehrere, insbesondere wenigstens zwei, wenigstens fünf oder wenigstens zehn, Lüfter umfassen. Die Zwischenlageranordnung kann beispielsweise mehrere Decken ventilatoren umfassen. Alternativ oder zusätzlich kann bei einer Ausführung einer Zwischenlageranordnung wenigstens einer insbesondere statischen bauliche Maßnahme zur Erzeugung einer Zwangslüftung vorgesehen sein, wie wenigstens ein Kamin und/oder Trichter.

Vorzugsweise wird bei dem oben beschriebenen erfindungsgemäßen Herstellungsverfahren eine erfindungsgemäße Zwischenlageranordnung verwendet. Die erfindungsgemäße Zwischenlageranordnung umfasst vorzugsweise zahlreiche erfindungsgemäße Blöcke.

Die Erfindung betrifft auch eine Anlage zum Herstellen von Dämmplatten aus einem Schaumstoff, vorzugsweise zum thermischen Dämmen von Immobilien. Vorzugsweise ist die Anlage zum Herstellen von Dämmplatten gemäß dem oben beschriebenen Verfahren ausgelegt und eingerichtet. Die Anlage umfasst eine Schaumstoff-Formvorrichtung, insbesondere eine Partikelschaum-Formvorrichtung zum Erzeugen eines, vorzugsweise quaderförmigen, Blocks mit einem Volumen von Weges 1 m³ aus einem Schaumstoff, insbesondere Partikelschaum, wie einem Polymer-Partikelschaum. Erfindungsgemäß ist die Schaumstoff-Formvorrichtung, insbesondere die Partikelschaum-Formvorrichtung zum Erzeugen eines insbesondere quaderförmigen Blocks mit wenigstens einem an den Block angeformten, insbesondere integral mit dem Block gebildeten, Abstandshalter an wenigstens einer Seitenfläche des Blocks ausgestattet.

Vorzugsweise umfasst die Partikelschaum-Formvorrichtung eine Kavität zum Formen des Blocks mit dem wenigstens einen Abstandshalter. Die Kavität umfasst wenigstens einen Topfabschnitt zum Formen des Abstandshalters. Die Innenseite des Topfabschnitt ist vorzugweise korrespondierend zu einer gewünschten konvex von der Seitenfläche des Blocks hervorstehenden Abstandshalter-Form gestaltet. Die Kavität für den Block ist mit wenigstens einem gelochten Abschnitt ausgestattet, wie einem Schlitzabschnitt oder Siebabschnitt, durch den beim Formen des Blocks Prozessdampf einbringbar und/oder entfernbar ist.

Gemäß einer bevorzugten Weiterbildung der Anlage ist der wenigstens eine Topfabschnitt frei von Öffnungen für den Prozessdampf. Der Topfabschnitt ist vorzugweise prozessdampfdicht. Die Bereitstellung eines gelochten Abschnitts ist erforderlich, geht jedoch mit einem erheblichen Aufwand einher. Überraschenderweise hat sich herausgestellt, dass in dem für wenigstens einen Abstandshalter oder in den für mehrere Abstandshalter vorgesehenen Topfabschnitt(en) keine Löcher für Prozessdampf vorgesehen werden brauchen, sodass die Fertigung eines Topfabschnitts besonders einfach und kostengünstig erfolgen kann.

Bei einer besonders bevorzugten Ausführung der erfindungsgemäßen Anlage ist die Schaumstoff-Formvorrichtung, insbesondere die Partikelschaum-Formvorrichtung, zur Fertigung eines Blocks mit einem Volumen von wenigstens 1 m³, insbesondere wenigstens 2 m³, vorzugsweise wenigstens 4 m³, und/oder nicht mehr als 20 m³, insbesondere nicht mehr als 10 m³, vorzugsweise nicht mehr als 8 m³ aufweist, wobei der Block besonders bevorzugt ein Volumen im Bereich 5 m³ bis 7 m³, ausgelegt und eingerichtet. Vorzugsweise definiert die Kavität der Schaumstoff-Formvorrichtung, insbesondere der Partikelschaum-Formvorrichtung, in einem geschlossenen Erzeugungszustand ein Hohlraumvolumen von wenigstens 1 m³, insbesondere wenigstens 2 m³, vorzugsweise wenigstens 4m³, und/oder nicht mehr als 20 m³, insbesondere nicht mehr als 10 m³, vorzugsweise nicht mehr als 8 m³.

Bei einer Ausführung umfasst die Anlage ferner eine Vereinzelungsvorrichtung, wie eine Schneidvorrichtung, beispielsweise eine Heißdraht-Schneidvorrichtung oder eine Sägedraht-Schneidvorrichtung. Die Vereinzelungsvorrichtung ist dazu ausgelegt und eingerichtet, die Dämmplatten mit einheitlichen Maßen und/ oder einem jeweiligen Platten-Volumen von weniger als 0,5 m³, insbesondere weniger als 0,2 m³, vorzugsweise weniger als 0,1 m³, aus dem wenigstens einen Block zu bilden.

Gemäß einer bevorzugten Ausführung kann die erfindungsgemäße Anlage zum Herstellen von Dämmplatten ferner eine Zwischenlageranordnung wie oben beschrieben umfassen.

Vorteilhafte Weiterbildungen sind in den abhängigen Ansprüchen angegeben. Weitere Eigenschaften, Merkmale und Vorteile der Erfindung werden durch die folgende Beschreibung einer bevorzugten Ausführungsform der Erfindung anhand der beiliegenden Zeichnung deutlich, in denen zeigen:
- Figur 1: eine schematische Darstellung eines erfindungsgemäßen Blocks mit sechs Abstandshaltern; und
- Figur 2: eine Zwischenlageranordnung mit drei in einer Reihe hintereinander angeordneten Blöcken;
- Figur 3: eine Detailansicht eines Abstandshalters zwischen zwei paarweise benachbarten Blöcken in der Reihe gemäß Figur 2;
- Figur 4: eine Draufsicht auf einen Topfabschnitt für eine Schaumstoff-Formvorrichtung;
- Figur 5: eine Querschnittsansicht des Topfabschnitt gemäß Schnittlinie A-A von Figur 4;
- Figur 6: eine geöffnete Kavität einer Schaumstoff-Formvorrichtung mit vier Topfabschnitten;
- Figur 7: eine Detailansicht der Kavität gemäß Figur 6;
- Figur 8: Temperaturgradiente in einem benachbarten Blockpaar;
- Figur 9a: eine schematische Vorderansicht einer anderen Ausführung eines erfindungsgemäßen Blocks mit zwei länglichen Abstandshaltern;
- Figur 9b: eine Seitenansicht des Blocks gemäß Figur 9a;
- Figur 10a: eine schematische Vorderansicht einer weiteren Ausführung eines erfindungsgemäßen Blocks mit vier Abstandshaltern mit rechteckiger Basisfläche;
- Figur 10b: eine Seitenansicht des Blocks gemäß Figur 10a; und
- Figur 10c: eine Draufsicht des Blocks gemäß Figur 10a.

In der nachfolgenden Beschreibung bevorzugter Ausführungsformen der Erfindung anhand der beiliegenden Figuren werden für dieselben oder ähnliche Komponenten zur Vereinfachung der Lesbarkeit dieselben oder ähnliche Bezugszeichen verwendet.

Ein erfindungsgemäßer Block wird nachfolgend im Allgemeinen mit Bezugszeichen 1 bezeichnet. Zur einfacheren Lesbarkeit werden für die gleichen oder ähnliche Komponenten verschiedener Blöcke die gleichen Bezugszeichen und unterschiedlichem Buchstabenannex verwendet. Eine Zwischenlageranordnung hat im Allgemeinen das Bezugszeichen 100.

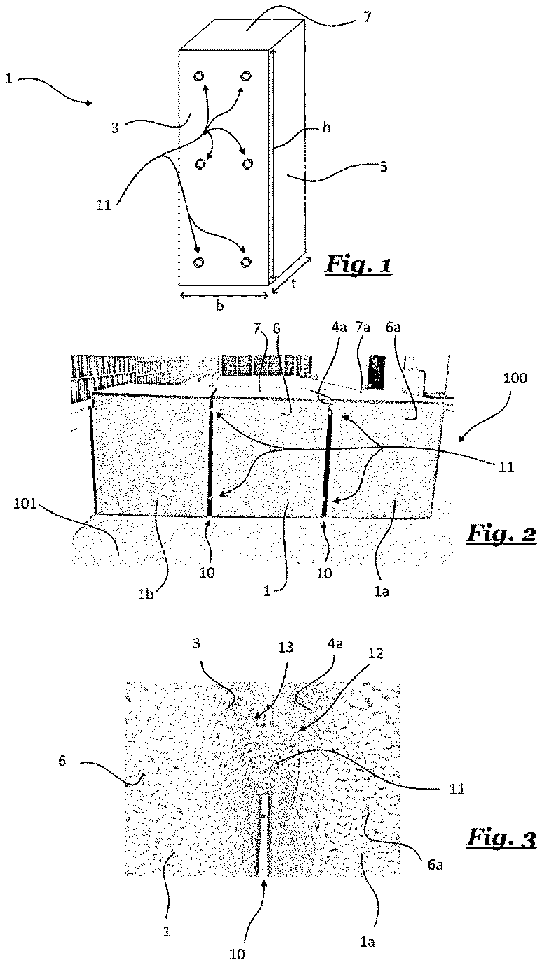

Figur 1 zeigt eine schematische Darstellung eines erfindungsgemäßen Blocks 1. Der Block 1 ist quaderförmig mit einer Höhe h von etwa 5 m, einer Vorderseite 3, die eine Breite b von etwa 1,20 m aufweist, und einer linken Seitenfläche 5, die eine Tiefe t von etwa 1,0 m definiert.

Bei dem in Figur 1 dargestellten Block 1 sind auf dessen Vorderseite 3 sechs gleichartige Abstandshalter 11 angeformt. Die sechs gleichartigen Abstandshalter 11 sind über die Vorderseite 3 gleichmäßig verteilt angeordnet. Die Seitenfläche 5 und die Oberseite 7 sind frei von Abstandshaltern. Auch die übrigen Seitenflächen des Blocks 1 sind eben und frei von Abstandshaltern.

Figur 2 zeigt eine Zwischenlageranordnung 100, bei der drei in einer Reihe hintereinander angeordnete Blöcke 1, la, 1b auf der ebenen und horizontalen Zwischenlagerfläche 101 aufliegen. Der mittlerer Block 1 ist zwischen einem vorderen Block 1a und einem hinteren Block 1b angeordnet. Zwischen den jeweils paarweise benachbarten Blöcken 1 und 1a sowie 1 und 1b ist jeweils ein ca. 5 cm großer Luftspalt 10 vorgesehen. Die Blöcke 1, la, 1b haben ausschließlich an ihrer jeweiligen Vorderseite Abstandshalter 11.

Für den Transport von Blöcken zur und in der Zwischenlageranordnung 100 können beispielsweise Gabelstapler oder andere Flurförderfahrzeuge mit Greifbacken verwendet werden. Die Greifbacken können insbesondere mit den planen rechten und linken Seitenflächen in Eingriff gebracht werden. Mit einem Greifer eines Förderfahrzeugs kann ein einzelner Block oder mehrere, beispielsweise zwei, paarweise nebeneinander anzuordnende, Blöcke ergriffen werden. Es ist auch denkbar, dass ein Greifer eines Förderfahrzeugs mehrere, beispielsweise zwei, paarweise hintereinander anzuordnende Blöcke mit wenigstens einem zwischen den Blöcken angeordneten Abstandshalter ergreift. Es kann vorgesehen sein, dass wenigstens ein Block mit einem Greifer eines Förderfahrzeugs derart ergriffen wird, dass der Fahrzeugführer auf die vorzugsweise glatte, insbesondere frei von Abstandshaltern ausgeführte, Rückseite eines Blocks blickt, wobei Vorderseite von dem Fahrzeugführer weg weisend orientiert ist und insbesondere die an der Vorderseite angeformten Abstandshalter entsprechend der Vorwärts-Richtung des Flurförderfahrzeugs orientiert sind.

Figur 3 zeigt eine Detailansicht des mittleren Blocks 1, dessen Abstandshalter 11 mit dem gegenüber der Vorderseite 3 des ersten Blocks 1 angeordneten Rückseite 4a des zweiten Blocks 1a in einem Berührkontakt steht, um den Luftspalt 10 zwischen den beiden Blöcken 1 und 1a zu definieren und zu erhalten. Die Rückseite 4a realisiert eine Gegenseitenfläche. Der vordere Block 1a hat eine ebene Rückseite 4a frei von Abstandshaltern. Der mittlere Block 1 hat ausschließlich an der Vorderseite 3 Abstandshalter 11. Zwischen der Seitenfläche 3 und der Gegenseitenfläche 4a dehnt sich der Luftspalt 10 aus.

Die Blöcke 1, la, 1b sind integral mit den daran angeformten Abstandshaltern 11 aus einem Hartschaumstoff aus einem Kunststoffmaterial, wie EPS, gebildet. Der Abstandshalter 11 definiert ausgehend von der Vorderseite 3 des Blocks 1 eine Abstandtiefe, die hier bei beispielsweise etwa 6 cm liegt, um den entsprechend breiten Luftspalt 10 zu definieren. Der Abstandshalter 11 kann in dem abgebildeten Beispiel eine im Wesentlichen kreisförmige Basisfläche mit dem Durchmesser von beispielsweise 5 cm haben.

Die Abstandshalter 11 haben eine sich ausgehend von ihrer Basisfläche leicht verjüngende, im Wesentlich zylindrische Gestalt. Die die kreisförmige Basisfläche der Abstandshalter 11 umgebende Übergangskante zwischen der Vorderseite 3 und dem hervorstehenden Abstandshalter 11 ist mit einem Übergangsradius 13 gebildet. Der Übergangsradius 13 hat einen Radius von etwa 2 cm. Die im Wesentlichen flache und zur Vorderseite 3 planparallele Stirnfläche des Abstandhalters 11 liegt an der Rückseite 4a des vorderen Blocks 1a flächig an. Die Randkante der Stirnfläche ist mit einem Radius 12 gebildet. Der Radius 12, der die Umfangskante der Stirnfläche vollumfänglich umgibt, kann etwa 1 cm messen.

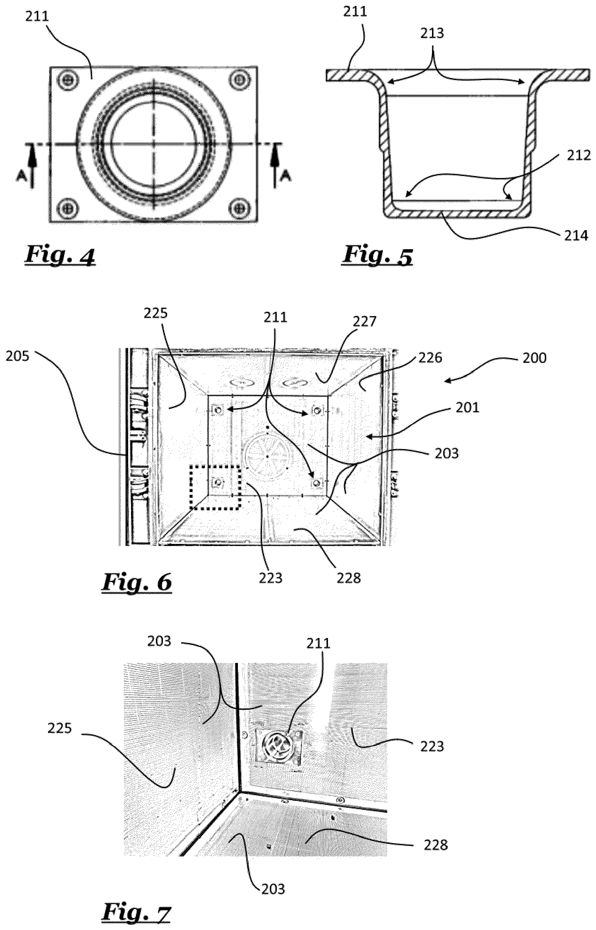

Figur 4 und Figur 5 zeigen verschiedene Ansichten eines Topfabschnitt 211. Figur 6 zeigt eine als Partikelschaum-Formvorrichtung 200 ausgeführte Schaumstoff-Formvorrichtung mit vier Topfabschnitten 211. Figur 7 zeigt eine Detaildarstellung eines der Topabschnitte 211 der Partikelschaum-Formvorrichtung 200 gemäß Figur 6.

Die in Figur 6 abgebildete Partikelschaum-Formvorrichtung 200 kann Teil einer erfindungsgemäßen Herstellungsanlage zum Bilden von Blöcken als Halbzeuge für Dämmplatten sein. Zum Herstellen eines Blocks in der Partikelschaum-Formvorrichtung 200 kann ein PolymerMaterial zum Bilden eines Schaumstoffs, insbesondere Partikelschaums, eingeführt und dieses anschließend mit einem Prozessdampf, beispielsweise Wasserdampf, beaufschlagt werden. Beispielsweise kann als Prozessdampf ein gesättigter Wasserdampf mit einer Temperatur im Bereich 100 °C bis 110 °C verwendet werden. Unter der Einwirkung des Wasserdampfs expandiert das Ausgangsmaterial zu einer geschlossenzelligen Struktur, die einen Hartschaum bildet, welche die Kavität 201 vollständig und formkomplementär ausfüllt und so dem Block formt. Anschließend kann der Block gemeinsam mit weiteren zuvor oder anschließend gefertigten Blöcken, oder gleichzeitig in einer anderen Partikelschaum-Formvorrichtung gefertigten Blöcken, zu einer Zwischenlagerfläche 101 gebracht werden.

Die Partikelschaum-Formvorrichtung 200 hat eine Kavität 201. In Figur 6 ist die Tür 205 der Partikelschaum-Formvorrichtung 200 geöffnet. Durch die geöffnete Tür 205 ist die Kavität 201 zugänglich. Die Kavität 201 realisiert in einem geschlossenen Erzeugungszustand (nicht dargestellt) eine negativ-Form, die zu einem herzustellenden Block formkomplementär ist.

Die Kavität 201 ist in Vertikalrichtung begrenzt durch eine Formoberseite 227 und eine dazu gegenüberliegende Formunterseite 228. Bezugnehmend auf Figur 6 ist die Kavität 201 in Horizontalrichtung einerseits durch eine linke Formseite 225 und andererseits durch eine rechte Formseite 226 begrenzt. In der Blickrichtung gemäß Figur 6 begrenzt außerdem die Form vorderseite 223 die Kavität 201. In der Formvorderseite 223 sind an den Eckbereichen der Kavität 201 die Topfabschnitt 211 angeordnet. In dem abgebildeten geöffneten Zustand der Partikelschaum-Formvorrichtung 201 gibt die Tür 205 eine zur vom Vorderseite 223 gegenüberliegende Entnahmeöffnung frei. Bei der hier abgebildeten Partikelschaum-Formvorrichtung 201 sind in der linken und der rechten Formseite 225, 226, wie auch in der Formvorderseite 223, vom Oberseite 227 und der der Formunterseite 228 großflächige Spaltabschnitte 203 vorgesehen, durch die Prozessdampf in die Kavität 201 eingeführt und aus der Kavität 201 abgelassen werden kann.

Der Topfabschnitt 211 ist, wie in den Figuren 4 und 5 erkennbar ist, keine Spalten oder andere Durchgangsöffnungen für Prozessdampf eingebracht. Der Topfabschnitt ist vielmehr massiv, beispielsweise als Gussteil oder als tiefgezogenes Blechteil gebildet. Der in Figur 4 dargestellte Topfabschnitt 211 hat einen Querschnitt mit kreisförmiger Basisfläche. Der Topfabschnitt 211 bildet eine sich leicht verjüngende, im Wesentlichen zylindrische Ausstülpung für die Kavität 201, um an den Block jeweils einen Abstandshalter integral an zu formen. Um den Übergangsradius 13 im Basisbereich des Abstandshalters 11 zu formen hat der Topfabschnitt 211 einen Übergangsradiusabschnitt 213. Der Topfabschnitt 211 hat einen Boden 214, der komplementär zur zu bildenden Stirnfläche des zylindrischen Abstandshalters 11 ist.

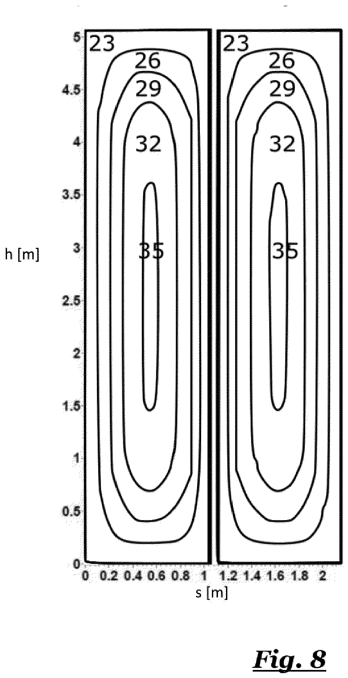

Figur 8 zeigt ein Diagramm der Temperaturgradienten in einer mittigen Querschnittsansicht durch zwei unmittelbar benachbarte Blöcke auf einer Zwischenlagerfläche bei einer Umgebungstemperatur von ca. 23 °Cca. 36 Stunden nach der Entnahme aus einer Partikelschaum-Formvorrichtung, wobei die Blöcke eine approximierte Entnahme-Kerntemperatur von ca. 80 °C hatten. An der horizontalen Achse des Diagramms ist ein kontinuierlicher Längen verlauf s aufgetragen, in der sich die Tiefe t der beiden Blöcke ausdehnt. Im Längenverlauf s ist zwischen den beiden benachbarten Blöcken ein ca. 10 cm tiefer Luftspalt. Die vertikale Achse des Diagramms bezeichnet die Höhe h der Blöcke. Die simulierte Kerntemperatur der Blöcke beträgt hier 35 °C. Zu den Seitenflächen der Blöcke hin fällt die Temperatur ab. Der größte Teil der Blöcke hat eine Temperatur im Bereich zwischen 23 °C und weniger als 32 °C. Die Kerntemperaturdaten wurden mit der DELPHIN-Software Version 6.1.0 zur gekoppelten Simulation von Wärme-, Feuchte-, Luft- und Salztransport in porösen Materialien ermittelt.

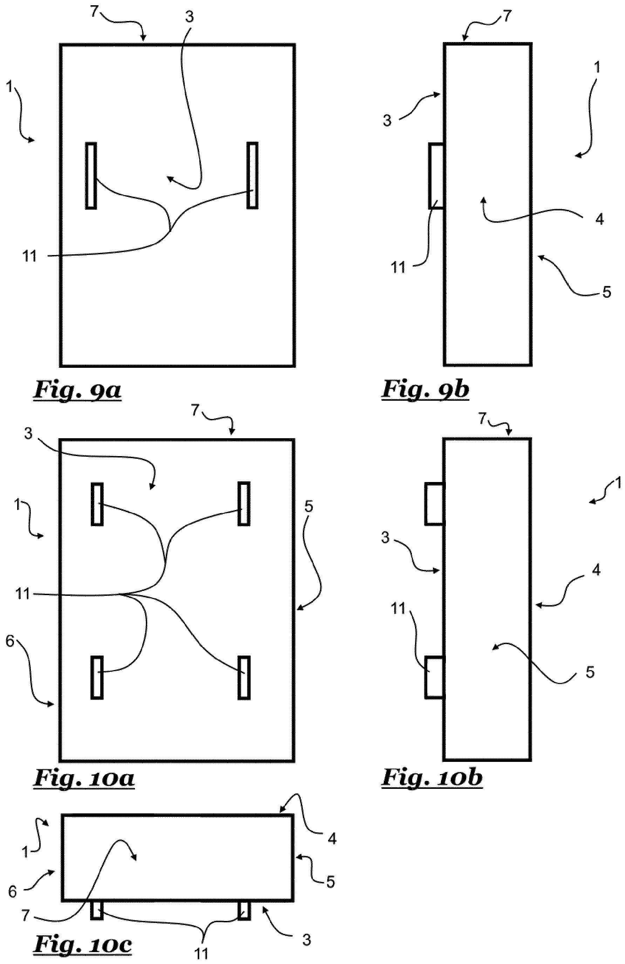

Figur 9a und 9b zeigen einen Block 1 ähnlich dem oben bezüglich Figur 1 beschriebenen. Der in den Figuren 9a und 9b dargestellte Block 1 hat an seiner Vorderseite 3 zwei gleichförmige längliche Abstandshalter 11. Die Abstandshalter 11 haben eine im wesentlichen rechteckige Basisfläche. Die Abstandshalter 11 sind in etwa auf mittiger Höhe des Blocks 1 integral angeformt. Die Längserstreckung der Abstandshalter 11 ist geradlinig in vertikaler Richtung ausgerichtet. Die Querschnittsbreite ist in der dargestellten Ausführungsform wesentlich kleiner als die Querschnittshöhe der Abstandshalter. Die Abstandshalter 11 definieren eine Abstandstiefe, die größer ist als die Querschnittsbreite der Basisfläche in horizontaler Richtung.

Die Figuren 10a bis 10c zeigen einen anderen Block 1, der sich von dem bezüglich Figur 9a und 9b beschriebenen nur durch die Form und Anzahl der Abstandshalter 11 unterscheidet. Der in den Figuren 10a bis 10c abgebildete Block 1 hat vier Abstandshalter 11 mit rechteckiger Basisfläche, die sich aus gehend von der Basisfläche pyramidenstumpfförmig verjüngen. Die Querschnittshöhe der rechteckigen Basisfläche ist ca. viermal so groß wie deren Querschnittsbreite. Die mehreren Abstandshalter 11 haben die gleiche Form. Die Abstandshalter 11 sind an der Vorderfläche 3 bezüglich einer vertikalen wie auch einer horizontalen, gedachten Achse spiegelsymmetrisch verteilt angeordnet. Die Seitenflächen 4, 6, und die Rückseite 5 wie auch die Oberseite 7 sind frei von Abstandshaltern.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichen

- 1: Block
- 3: Vorderseite
- 4: Rückseite
- 5: linke Seitenfläche
- 6: rechte Seitenfläche
- 7: Oberseite
- 11: Abstandshalter
- 12: Radius
- 13: Übergangsradius
- 100: Zwischenlageranordnung
- 101: Zwischenlagerfläche
- 200: Partikelschaum-Formvorrichtung
- 201: Kavität
- 203: Schlitzabschnitt
- 205: Tür
- 211: Topfabschnitt
- 212: Radiusabschnitt
- 213: Übergangsradiusabschnitt
- 223: Formvorderseite
- 225: linke Formseite
- 226: rechte Formseite
- 227: Formoberseite
- 228: Formunterseite

- b: Breite
- h: Höhe
- s: Längenverlauf
- t: Tiefe

## Patentansprüche

1. Verfahren zum Herstellen von Dämmplatten aus einem Schaumstoff, vorzugsweise zum thermischen Dämmen von Immobilien, umfassend:
a) Erzeugen mehrerer, vorzugsweise quaderförmiger, Blöcke mit einem Volumen von wenigstens 1 m³ aus einem, insbesondere organischen oder anorganischen, Schaumstoff, vorzugweise einem Partikelschaum, wie einem Polymer-Partikelschaum, vorzugsweise umfassend oder bestehend aus expandiertem Polystyrol (EPS), in einer Schaumstoff-Formvorrichtung, insbesondere einer Partikelschaum- Formvorrichtung;
b) Konditionieren der mehreren Blöcke, wobei die mehreren Blöcke auf einer Zwischenlagerfläche angeordnet sind, wobei das Konditionieren Abkühlen, Trocknen und/oder Ausgasen der Blöcke umfasst;
c) Vereinzeln einer Vielzahl von Dämmplatten aus wenigstens einem der mehreren Blöcke,
**dadurch gekennzeichnet, dass**
während dem Konditionieren kontinuierlich ein Luftspalt zwischen wenigstens zwei benachbart auf der Zwischenlagerfläche angeordneten Blöcken bereitgestellt wird.

2. Verfahren nach Anspruch 1, **dadurch gekennzeichnet, dass**
wenigstens ein Abstandshalter zum Erhalten des Luftspalts während dem Konditionieren zwischen den wenigstens zwei benachbarten Blöcken angeordnet wird.

3. Verfahren nach Anspruch 2, **dadurch gekennzeichnet, dass**
der wenigstens eine Abstandshalter vor dem Konditionieren an wenigstens einen ersten der wenigstens zwei benachbarten Blöcke angeformt wird oder vorliegt.

4. Verfahren nach Anspruch 3, **dadurch gekennzeichnet, dass**
der wenigstens eine Abstandshalter an den wenigstens einen ersten Block beim Erzeugen dieses Blockes angeformt wird, wobei insbesondere der wenigstens eine Abstandshalter beim Erzeugen dieses Blocks integral mit dem Block, vorzugsweise aus dem Schaumstoff, gebildet wird, wobei insbesondere der wenigstens eine Abstandshalter an einer Übergangskante zum jeweils zugeordneten, insbesondere quaderförmigen, Block mit einer Übergangskurve, insbesondere einem Übergangsradius, gebildet wird.

5. Verfahren nach einem der vorstehenden Ansprüche, **dadurch gekennzeichnet, dass** der wenigstens eine Abstandshalter mit einer rechteckigen und/oder länglichen Basisfläche gebildet wird, wobei die Basisfläche in einem Kontaktbereich des Abstandshalters zu einer Seitenfläche des zugeordneten, vorzugsweise quaderförmigen, Blocks angeordnet wird.

6. Verfahren nach einem der Ansprüche 1 bis 4, **dadurch gekennzeichnet, dass** der wenigstens eine Abstandshalter mit einer runden Basisfläche gebildet wird, wobei die Basisfläche in einem Kontaktbereich des Abstandshalters zu einer Seitenfläche des zugeordneten, vorzugsweise quaderförmigen, Blocks angeordnet wird, wobei insbesondere der wenigstens eine Abstandshalter halbkugelförmig, zylinderförmig, kegelförmig oder kegelstumpfförmig, bevorzugt zylinderförmig, kegelförmig oder kegelstumpfförmig, gebildet wird und/oder sich ausgehend von der Basisfläche verjüngt.

7. Verfahren nach einem der Ansprüche 4 bis 6, **dadurch gekennzeichnet, dass** der wenigstens eine Abstandshalter vor dem oder während dem Vereinzeln der Dämmplatten von dem zugeordneten Block abgetrennt wird, wobei vorzugsweise das Material des Abstandshalters, insbesondere bei der Erzeugung eines anderen Blocks, zumindest teilweise wiederverwertet wird.

8. Verfahren nach einem der vorstehenden Ansprüche, **dadurch gekennzeichnet, dass** das Vereinzeln der Dämmplatten aus wenigstens einem der mehreren Blöcke weniger als 120 Stunden, insbesondere nicht mehr als 72 Stunden, vorzugsweise nicht mehr als 48 Stunden, besonders bevorzugt nicht mehr als 24 Stunden, nach dem Erzeugen dieses Blockes erfolgt.

9. Verfahren nach einem der vorstehenden Ansprüche, **dadurch gekennzeichnet, dass** die mehreren Blöcke während dem Konditionieren, insbesondere kontinuierlich, mit einer Luftströmung beaufschlagt werden.

10. Block zum Herstellen von Dämmplatten, vorzugsweise zum thermischen Dämmen von Immobilien, wobei der, insbesondere quaderförmige, Block ein Volumen von wenigstens 1 m³ aufweist und einen, insbesondere organischen oder anorganischen, Schaumstoff, vorzugsweise einen Partikelschaum, wie ein Polymer-Partikelschaum, vorzugsweise umfassend oder bestehend aus expandiertem Polystyrol (EPS), umfasst oder daraus besteht,
**dadurch gekennzeichnet, dass**
dieser Block wenigstens eine, insbesondere ebene, Seitenfläche aufweist, an der wenigstens ein von dieser Seitenfläche hervorstehender Abstandshalter angeformt ist oder vorliegt.

11. Block nach Anspruch 10, **dadurch gekennzeichnet, dass** der wenigstens eine Abstandshalter integral mit dem Block, vorzugsweise aus dem Schaumstoff, insbesondere dem Partikelschaum, gebildet ist, wobei insbesondere der wenigstens eine Abstandshalter an einer Übergangskante zu der Seitenfläche eine Übergangskurve, insbesondere einen Übergangsradius, aufweist.

12. Block nach einem der Ansprüche 10 oder 11, **dadurch gekennzeichnet, dass** der wenigstens eine Abstandshalter an der Seitenfläche eine längliche und/oder rechteckige Basisfläche aufweist, wobei insbesondere der wenigstens eine Abstandshalter kuppelförmig, kubusförmig, pyramidenförmig oder pyramidenstumpfstumpfförmig geformt ist.

13. Block nach einem der Ansprüche 10 oder 11, **dadurch gekennzeichnet, dass** der wenigstens eine Abstandshalter an der Seitenfläche eine runde Basisfläche aufweist, wobei insbesondere der wenigstens eine Abstandshalter halbkugelförmig, zylinderförmig, kegelförmig oder kegelstumpfförmig geformt ist.

14. Block nach einem der Ansprüche 10 bis 13, **dadurch gekennzeichnet, dass** der wenigstens eine Abstandshalter sich ausgehend von der Seitenfläche verjüngt.

15. Block nach einem der Ansprüche 10 bis 14, **dadurch gekennzeichnet, dass** der wenigstens eine Abstandshalter eine Breite, insbesondere einen Basisflächendurchmesser, parallel zur Seitenfläche aufweist, die nicht mehr als 20 cm, vorzugsweise nicht mehr als 10 cm, besonders bevorzugt 6 cm, beträgt.

16. Block nach einem der Ansprüche 10 bis 15, **dadurch gekennzeichnet, dass** der wenigstens eine Abstandshalter eine Abstandstiefe senkrecht zur Seitenfläche definiert, die wenigstens 3 cm, vorzugsweise wenigstens 5 cm, und/oder, insbesondere und, nicht mehr als 10 cm, vorzugsweise nicht mehr als 6 cm, beträgt.

17. Block nach einem der Ansprüche 10 bis 16, **gekennzeichnet durch** wenigstens 2 und/oder, insbesondere und, nicht mehr als 10, insbesondere nicht mehr als 6, vorzugsweise nicht mehr als 4, an dieser Seitenfläche angeordnete Abstandshalter, wobei vorzugsweise die an derselben Seitenfläche angeordneten Abstandshalter die gleiche Abstandstiefe aufweisen und/oder eine kontinuierliche Luftspaltbreite zu einer korrespondierenden, insbesondere ebenen, Gegenseitenfläche eines anderen Blocks definieren.

18. Zwischenlageranordnung umfassend eine, insbesondere horizontale, Zwischenlagerfläche und mehrere nebeneinander auf der Zwischenlagerfläche angeordnete Blöcke zum Herstellen von Dämmplatten, vorzugsweise zum thermischen Dämmen von Immobilien, wobei die einzelnen, insbesondere quaderförmigen, Blöcke je ein Volumen von wenigstens 1 m³ aufweisen und, insbesondere organischen oder anorganischen, Schaumstoff, vorzugsweise Partikelschaum, wie ein Polymer-Partikelschaum, vorzugsweise umfassend oder bestehend aus expandiertem Polystyrol (EPS), umfassen oder daraus bestehen, insbesondere nach einem der Ansprüche 13 bis 29, **dadurch gekennzeichnet, dass** zwischen wenigstens zwei paarweise benachbarten Blöcken ein Luftspalt bereitgestellt ist, vorzugsweise dass zwischen sämtlichen jeweils paarweise benachbarten Blöcken ein Luftspalt bereitgestellt ist, der wenigstens 3 cm, vorzugsweise wenigstens 5 cm, und/oder, insbesondere und, nicht mehr als 10 cm, vorzugsweise nicht mehr als 6 cm, beträgt.

19. Zwischenlageranordnung nach Anspruch 18, **dadurch gekennzeichnet, dass** zwischen den wenigstens zwei paarweise benachbarten Blöcken wenigstens ein Abstandshalter zum Erhalten des Luftspalts angeordnet ist.

20. Zwischenlageranordnung nach einem der Ansprüche Anspruch 18 oder 19,
**gekennzeichnet durch**
wenigstens einen Lüfter, wie einen Ventilator, zum Beaufschlagen der Blöcke mit einer Luftströmung.

21. Anlage zum Herstellen von Dämmplatten aus einem Schaumstoff, vorzugsweise zum thermischen Dämmen von Immobilien, insbesondere gemäß einem der Ansprüche 1 bis 9, **gekennzeichnet durch**
eine Schaumstoff-Formvorrichtung, insbesondere eine Partikelschaum-Formvorrichtung, zum Erzeugen eines, vorzugsweise quaderförmigen, Blocks mit einem Volumen von wenigstens 1 m³ aus einem, insbesondere organischen oder anorganischen, Schaumstoff, vorzugsweise Partikelschaum, wie einem Polymer-Partikelschaum, vorzugsweise umfassend oder bestehend aus expandiertem Polystyrol (EPS), und wenigstens einem an dem Block angeformten, insbesondere integral mit dem Block gebildeten, Abstandshalter an wenigstens einer Seitenfläche des Blocks.

22. Anlage nach Anspruch 21, **dadurch gekennzeichnet, dass**
die Schaumstoff-Formvorrichtung, insbesondere die Partikelschaum-Formvorrichtung, eine Kavität zum Formen des Blocks mit dem wenigstens einen Abstandshalter umfasst, wobei die Kavität wenigstens einen gelochten Abschnitt, wie einen Schlitzabschnitt, zum Einbringen und/oder Entfernen von Prozessdampf beim Formen des Blocks aufweist, und wobei die Kavität wenigstens einen Topfabschnitt zum Formen des Abstandshalters umfasst, wobei insbesondere der wenigstens eine Topfabschnitt frei von Öffnungen für den Prozessdampf ist oder wobei insbesondere der wenigstens eine Topfabschnitt Öffnungen für den Prozessdampf aufweist.
